# EUROPEAN PATENT APPLICATION

(11) **EP 1 886 808 A1**
(43) Date of publication of application: **13.02.2008**
(21) Application number: 07113475.3
(22) Date of filing: 31.07.2007
(51) Int. Cl.: B32B 27/08, B32B 27/28, E04D 3/35, E04D 5/10

(54) **Multilayer coextruded plastics roofing sheets with an upper layer of poly(acrylonitrile-styrene-acrylate)**

(30) Priority: 11.08.2006 IT GE20060087
(71) Applicant: EUR.EX S.r.l., 47899 Serravalle (SM)
(72) Inventor: Santi, Emiliano, 47899, Serravalle (SM)
(74) Representative: Porsia, Attilio

(57) **Abstract**

Multilayer coextruded plastics sheets for producing roofing elements for roofs or infills or the like, characterised in that the upper layer thereof, or layer facing towards the outside of the roofing element, is composed of poly(acrylonitrile-styrene-acrylate), also known as ASA (acrylonitrile-styrene-acrylate polymer).

## Description

The present invention relates to roofing sheets for building or warehouse roofs and more particularly to plastics roofing sheets obtained by a coextrusion process, in which the fluid material is thermoformed or sized in a plurality of layers (generally, although not necessarily, in three layers) which, although permanently joined together by chemical bonds, nevertheless retain their own specific properties.

These sheets are commonly used in place of and instead of conventional tile slabs because they exhibit mechanical strength and thermal and acoustic insulation properties which are distinctly superior to those of tile slabs at a substantially lower cost.

At present, these sheets are generally manufactured with the upper layer made from poly(methyl methacrylate) (PMMA).

Using said material entails quite a number of disadvantages and shortcomings.

This material in fact exhibits poor mechanical impact strength properties, which makes the sheets produced therewith particularly subject to damage, for example in the event of hail.

Furthermore, said material does not have good resistance to atmospheric agents and to exposure to sunlight, having a tendency to fade easily.

In addition to these purely technical negative properties, the fact that the surface of PMMA sheets is clear (except for those with a frosted finish, which worsens mechanical impact strength) means that it is immediately evident that the sheets obtained using clear PMMA are not made from tile, so arousing preconceptions and prejudices on the part of the end user.

The primary aim of the present invention is to provide a multilayer coextruded plastics sheet in which the material constituting the upper or outer layer of the sheet is such that the shortcomings of PMMA outer layers are overcome.

In the course of extensive experiments carried out on many plastics which were potentially suitable for this purpose and after numerous tests, the material selected was poly(acrylonitrile-styrene-acrylate), designated in brief ASA (acrylonitrile-styrene-acrylate polymer).

This is because, over the course of the testing to which it has been subjected, this material has exhibited physical, mechanical and also aesthetic properties which make it particularly suitable for use as an outer layer or upper layer in a multilayer coextruded plastics laminate for roofing sheets for buildings.

Coextruded sheets containing a layer of poly(acrylonitrile-styrene-acrylate) (ASA) as the material of the upper or outer layer exhibit, in response to the various tests to which they have been subjected, impact strength properties which are very greatly improved relative to similar sheets with a PMMA outer layer and a comparison of their hail resistance to standard UNI 10890 reveals an improvement of up to 30% in impact strength properties for the same type of manufactured article.

Furthermore, the material ASA has a Vicat value (namely a softening temperature) which is very high, which helps the manufactured article to retain its properties even at elevated temperature. This latter property proves particularly favourable when recovering the material, since said material is self-recyclable, and prevents the recovered product from losing the characteristic properties of the original material.

Finally, given that this material has an opaque surface, it lends itself particularly well to the production of manufactured articles which are very similar in appearance to manufactured articles made from tile.

Roofing sheets obtained by coextrusion are generally composed of three layers, namely an upper layer, which in the case of the present invention is an ASA layer, a central layer which provides a matrix permanently bonding the two external layers and fulfilling the load-bearing function, and a particularly resilient lower layer.

Such sheets may, however, also be composed of a different number of layers, for example two or four layers.

The present invention is accordingly not limited to the described embodiments, but includes all those variant embodiments of a roofing sheet obtained using a coextrusion process, in which the upper layer is composed of poly(acrylonitrile-styrene-acrylate), as claimed below.

## Claims

1. Multilayer coextruded plastics sheets for producing roofing elements for roofs or the like, **characterised in that** the upper layer thereof, or layer facing towards the outside of the roofing element, is composed of poly(acrylonitrile-styrene-acrylate), also known as ASA (acrylonitrile-styrene-acrylate polymer).

2. Multilayer coextruded plastics sheets according to Claim 1, comprising two or more coextruded layers, the upper of which is of ASA, an intermediate layer for bearing the load and anchoring the adjoining layers, and one or more relatively resilient lower layers.
